# EUROPEAN PATENT SPECIFICATION

(11) **EP 1 405 669 B1**
(45) Date of publication and mention of the grant of the patent: **28.11.2007**
(21) Application number: 03019511.9
(22) Date of filing: 28.08.2003
(51) Int. Cl.: B01J 21/00, B01J 21/10, C11D 1/72

(54) **Production process for glycidyl ether adduct and catalyst used for the process**
Herstellungsverfahren für Glycidylether Addukt und dazu verwendete Katalysator
Procédé de fabrication d'adduit de glycidylether et catalyseur utilisé dans ce procédé

(30) Priority: 29.08.2002 JP 2002251377
(43) Date of publication of application: 07.04.2004
(73) Proprietor: KAO CORPORATION, Tokyo 103-8210 (JP)
(72) Inventor: Nagasawa, Atsushi, Wakayama-shi Wakayama 640-8580 (JP); Uno, Mitsuru, Wakayama-shi Wakayama 640-8580 (JP); Kitsuki, Tomohito, Wakayama-shi Wakayama 640-8580 (JP)
(74) Representative: HOFFMANN EITLE

(56) References cited:
- WO-A-93/09214
- US-A- 4 465 866
- US-A- 4 970 191
- US-A- 5 012 012
- US-A- 5 686 379
- REICHLE, W.T. ET AL.: "The nature of the thermal decomposition of a catalytically active anionic clay mineral" JOURNAL OF CATALYSIS, vol. 101, 1986, pages 352-359, XP009036728
- PATENT ABSTRACTS OF JAPAN vol. 015, no. 181 (C-0830), 9 May 1991 (1991-05-09) & JP 03 044354 A (DAICEL CHEM IND LTD), 26 February 1991 (1991-02-26)
- PATENT ABSTRACTS OF JAPAN vol. 011, no. 163 (C-424), 26 May 1987 (1987-05-26) & JP 61 291549 A (NIPPON NOHYAKU CO LTD), 22 December 1986 (1986-12-22)

## Description

### Field of the Invention

The present invention relates to a process for producing a glycidyl ether adduct which is useful as a surfactant to be incorporated in formulations such as detergents and cosmetics, and to a catalyst used for such process.

### Background of the Invention

In general, an addition reaction between a glycidyl ether and an organic compound having active hydrogen atoms is carried out in the presence of a basic catalyst. Active hydrogen atoms originating in a glycidyl ether are newly produced in the reaction product, and therefore a problem is created in which the excess glycidyl ether is further reacted with the newly produced reaction product having active hydrogen atoms. For example, a reaction between glycerin and a glycidyl ether is described in Japanese Patent Application Laid-Open (through PCT) No. 500861/1995, and in this case, glycerin is used in an amount of five times the moles based on the amount of the glycidyl ether in order to inhibit the excess addition reaction described above. However, excess use of glycerin results in, as a matter of course, a reduction in the productivity and an increase in the cost required for recovery, and therefore is not preferred from an industrial viewpoint.

### Summary of the Invention

The present invention provides a process for producing a glycidyl ether adduct, which comprises subjecting an active hydrogen-containing organic compound as defined in claim 1 and a glycidyl ether to an addition reaction in the presence of a catalyst comprising a complex oxide of magnesium and at least one element selected from aluminium and zinc.

### Detailed Description of the Invention

The present inventors have found that, by using a specific complex metal oxide as a catalyst, it is possible to efficiently provide a desired glycidyl ether adduct through an addition reaction between a glycidyl ether and said organic compound having active hydrogen atoms even if the organic compound is used in a small excess amount. Further, the present inventors have found that a product in which one glycidyl ether is added or a product in which two glycidyl ethers are added can be synthesized by changing the mole ratio of the organic compound to the glycidyl ether.

The complex oxide of Mg (magnesium) and at least one of the elements described above is preferably an oxide which comprises Mg as a principal component and to which at least one of the elements of aluminium and zinc is added.

A blending proportion of the magnesium to aluminium and/or zinc which are contained in the catalyst of the present invention is such a proportion that the amount of aluminium and/or zinc is preferably from about 0.005 to 0.4 atom, particularly preferably from about 0.01 to 0.3 atom per atom of magnesium which is a principal component. A trace amount of a third component may be added to the catalyst as long as such addition does not adversely affect the catalyst of the present invention.

The catalyst of the present invention may consist essentially of the complex oxide described above or may comprise a carrier on which the complex oxide is supported. The carrier usable in the invention includes diatomaceous earth, zeolite, mordenite, montmorillonite, tin oxide, titanium oxide and activated carbon. The amount of the complex oxide supported on the carrier is preferably from about 10 to 80 % by weight, more preferably from about 20 to 60 % by weight of the carrier.

A process for producing the catalyst of the present invention is not particularly restricted, and it is produced by a publicly known process. For example, it is produced by a co-precipitation process in which a precipitating agent is added to a mixed aqueous solution or an aqueous dispersion containing compounds such as chlorides, hydroxides, oxides, nitrates, sulfates or carbonates of the respective elements, or a precipitating agent is added to a mixed aqueous solution or an aqueous dispersion containing compounds capable of changing to catalyst components other than a carrier component in the presence of a fine powdery carrier to obtain a precipitate and then the precipitate is washed with water, dried and calcined. Alternatively, the catalyst is produced by an impregnation process in which a fine powdery carrier is impregnated with an aqueous solution or an aqueous dispersion of compounds capable of changing to catalyst components other than a carrier component and the resulting carrier is then dried and calcined. When the catalyst is produced by the co-precipitation process or the impregnation process, any compounds can be used for the above-mentioned compounds as long as they are water-soluble or water-dispersible.

A specific example of the co-precipitation process used for preparing the catalyst of the present invention includes, for example, a process in which, to a mixed aqueous solution or aqueous dispersion containing a magnesium compound selected from chloride, hydroxide, oxide, nitrate, sulfate and carbonate of magnesium and a compound selected from chlorides, hydroxides, oxides, nitrates, sulfates and carbonates of aluminium and/or zinc preferably a mixed aqueous solution or aqueous dispersion containing magnesium nitrate, magnesium chloride, magnesium sulfate or magnesium hydroxide and carbonates, hydroxides or oxides of aluminium and/or zinc, more preferably a mixed aqueous solution or aqueous dispersion containing magnesium nitrate, magnesium chloride, magnesium sulfate or magnesium hydroxide and carbonate, hydroxide or oxide of aluminum or zinc, an aqueous solution of an alkaline agent selected from hydroxides or carbonates of ammonia or alkaline metals, preferably hydroxides of alkaline metals, is added in an amount of from about 0.8 to 1.2 times equivalent based on the amount of the compound(s) of aluminium and/or zinc to adjust the pH to 6 to 11, preferably 7 to 10, to give hydroxides, carbonates or oxides of the element(s) or a mixture thereof by a precipitation reaction, and after removing water soluble salts by washing with water, the hydroxides, carbonates or oxides of aluminium and/or zinc are calcined at a temperature in a range of from about 400 to 900°C, preferably from about 450 to 700°C. Further, a specific example of the impregnation process used for preparing the catalyst of the present invention includes a process in which a carrier, carbonate, hydroxide or oxide of magnesium and a carbonate, hydroxide or oxide of aluminium and/or zinc are mixed in an aqueous medium, dried and then calcined at a temperature in a range of from about 400 to 900°C, preferably from about 450 to 700°C. These oxides may be separately prepared and mixed in a required proportion for use. Among these preparation processes, the co-precipitation process is particularly preferred.

The active hydrogen-containing organic compound used for the process for producing a glycidyl ether adduct according to the present invention is defined in claim 1.

The glycidyl ether used in the present invention includes a compound represented by Formula (1): 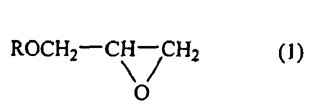 wherein R represents a linear or branched alkyl or alkenyl group having 1 to 36 carbon atoms or a phenyl group. In Formula (1), R is an alkyl or alkenyl group having preferably 1 to 20, more preferably 4 to 18 carbon atoms, and is particularly preferably an alkyl group having 4 to 18 carbon atoms. Specific examples of preferred R include butyl, pentyl, 2-methylbutyl, hexyl, octyl, 2-ethylhexyl, decyl, dodecyl, hexadecyl and methylheptadecyl (isostearyl).

The glycidyl ether adduct obtained in the present invention is preferably a monoalkyl (or alkenyl or phenyl) ether product in which one glycidyl ether is added or a dialkyl (or alkenyl or phenyl) product in which two glycidyl ethers are added.

The addition reaction of the glycidyl ether using the catalyst of the present invention can readily be carried out according to a conventional operating procedure under conventional reaction conditions. The reaction temperature is preferably from about 80 to 230°C, more preferably from about 120 to 200°C. The amount of the catalyst varies depending on the mole ratio of the starting materials and is usually such an amount that the complex oxide described above amounts to preferably from about 0.05 to 20 % by weight, more preferably from about 1 to 10 % by weight based on the amount of the glycidyl ether.

When producing the monoalkyl (or alkenyl or phenyl) ether product in which one glycidyl ether is added, a feeding proportion of the glycidyl ether to the organic compound having active hydrogen atoms falls preferably in a range of from about 1 : 0.9 to 1 : 3, particularly from about 1 : 0.9 to 1 : 1.5 in terms of a mole ratio from the viewpoint of a rise in the productivity. On the other hand, when producing the dialkyl (or alkenyl or phenyl) product in which two glycidyl ethers are added, a feeding proportion of the glycidyl ether to the organic compound having active hydrogen atoms falls preferably in a range of from about 1.8 : 1 to 3 : 1, particularly from about 1.8 : 1 to 2.5 : 1 in terms of a mole ratio from the viewpoint of a rise in the productivity.

The reaction is preferably carried out under an atmosphere of an inert gas such as, for example, nitrogen gas. The reaction pressure is preferably from about 0.1 to 20 atm, more preferably from about 0.9 to 10 atm.

In the reaction operation, for example, a reactor is charged with the raw material of the active hydrogen-containing organic compound and the catalyst, and after substituting with nitrogen, a glycidyl ether is introduced thereinto at a predetermined temperature to effect a reaction between them. A method for separating the catalyst is not specifically restricted, and considered is a method in which the reaction product obtained after the reaction is cooled and water for reducing the viscosity and a filtering aid (diatomaceous earth, a cellulose aid, activated clay or the like) are added to filter the catalyst. The preferred product obtained by the process of the present invention is substantially neutral and therefore need not be neutralized by adding an acid or an alkali.

The following examples further describe and demonstrate embodiments of the present invention. The examples are given solely for the purpose of illustration and are not to be construed as limitations of the present invention.

### Examples

### [Catalyst preparation]

### Catalyst 1

A complex oxide having a chemical composition of Mg₆Al₂(OH)₁₆CO₃ 4H₂O (Kyoward 500 manufactured by Kyowa Chemical Co., Ltd.) (15g) was activated by calcining at 450°C for 2 hours to obtain 8.9g of a catalyst powder.

### Catalyst 2

A complex oxide having a chemical composition of Mg_{0.7}Al_{0.3}O_{1.15} (Kyoward 2000 manufactured by Kyowa Chemical Co., Ltd.) was used as a catalyst as it is.

### Catalyst 3

Aluminum hydroxide-magnesium having a chemical composition of 5MgO·Al₂O₃·mH₂O (Kyoward 300 manufactured by Kyowa Chemical Co., Ltd.) (15g) was activated by calcining at 550°C for 2 hours to obtain 8.6 g of a catalyst powder.

### Catalyst 4

To a 5L reactor were fed a mixed solution prepared by dissolving 55.8g of Zn(NO₃)₂·6H₂O, 112.5g of Al(NO₃)₂. 9H₂O and 144.2g of Mg(N0₃)₂·6H₂O in 1299g of ion-exchange water, a 0.24 mol/L Na₂CO₃ aqueous solution and a 4N NaOH aqueous solution at the rate of 12.5 ml/min, 9 ml/min and 5 to 7.5 ml/min, respectively. The reactor was charged in advance with 500g of water and stirred at 250 rpm by means of a constant speed stirrer. The temperature of the reaction liquid was maintained at 15 ± 2°C, and the amount of the NaOH aqueous solution to be added was controlled to maintain the pH at 9.7 to 10.3 to carry out a precipitation reaction for 2 hours. Then, feeding of the respective aqueous solutions was stopped, and the suspension was aged for one hour with stirring. This suspension was filtered, and the resulting white solid matter was sufficiently washed with ion-exchange water. After washing, the solid matter was dried for 12 hours in a dryer at 110°C to obtain a white solid catalyst precursor represented by the following formula: [(Zn_{0.25}Mg_{0.75})_{5/7}Al_{2/7}(OH)₂](CO₃)_{1/7}CH₂O. Then, the catalyst precursor after drying was calcined at 550°C for 2 hours to obtain a catalyst.

It is apparent from the researches by W. T. Reichle et al. (Journal of Catalysis, 101, 352-359 (1986)) that the catalyst shown above turns to a complex oxide on these calcining conditions.

### Example 1

A 300mL four-necked flask was charged with 3.1 g of catalyst 1 obtained in the catalyst preparation, 35.9 g of glycerin and 60.5 g of 2-ethylhexyl glycidyl ether, and they were reacted at 170°C for 6 hours under a nitrogen atmosphere while stirring to obtain 99.5 g of a mixture containing diglyceryl mono-2-ethylhexyl ether. A result obtained by analyzing the composition of this mixture by means of gas chromatography is shown in Table 1.

### Examples 2 to 8

Using Catalysts 2 to 4, a glycidyl ether and an active hydrogen-containing organic compound each in an amount shown in Table 1 were reacted similarly to Example 1 at the temperature and for the time shown in Table 1. The composition and the selectivity of each of the products obtained by analyzing them by means of gas chromatography are shown in Table 1.

### Comparative Example 1

A 300mL four-necked flask was charged with 0.4 g of NaOH as a catalyst, 55.3 g of glycerin and 93.1 g of 2-ethylhexyl glycidyl ether, and the reaction materials were reacted at 180°C for 5 hours under a nitrogen atmosphere with stirring to obtain 148.4 g of a mixture containing diglyceryl mono-2-ethylhexyl ether. The composition of this mixture was analyzed by means of gas chromatography, and the result thereof is shown in Table 1.

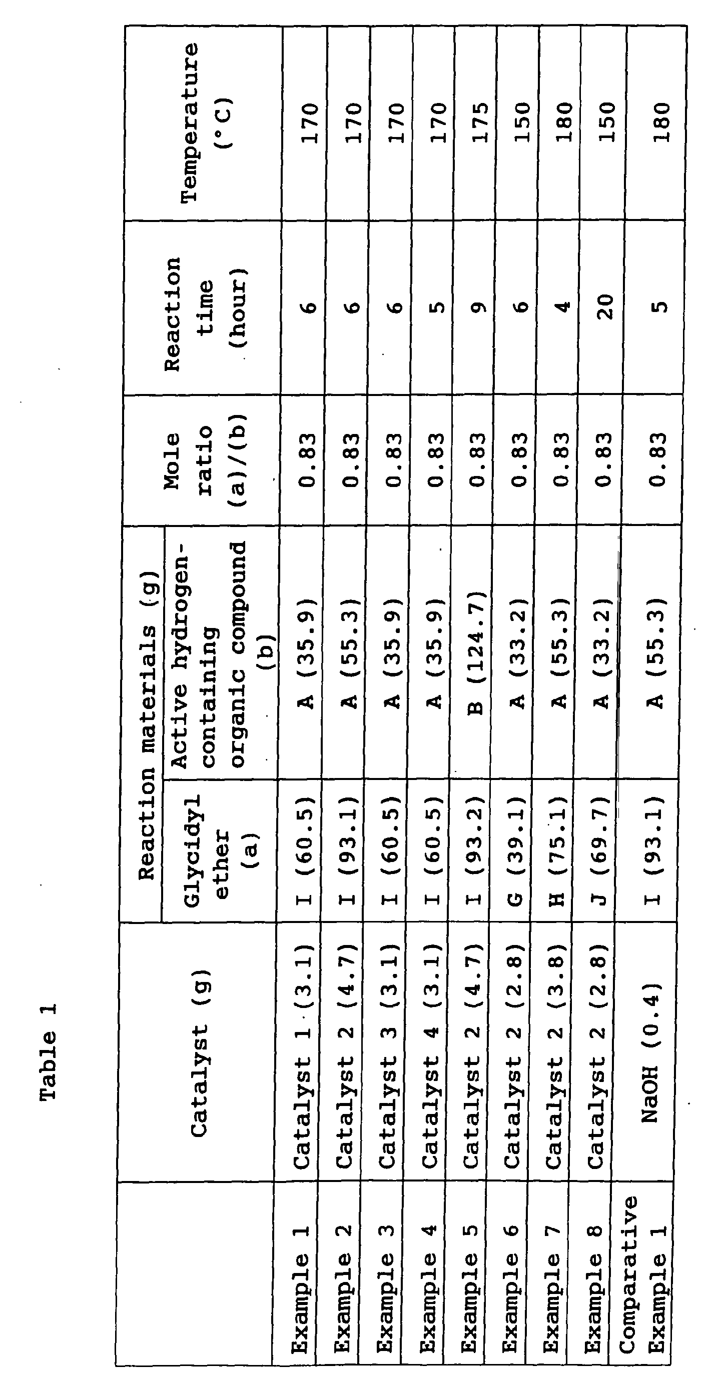

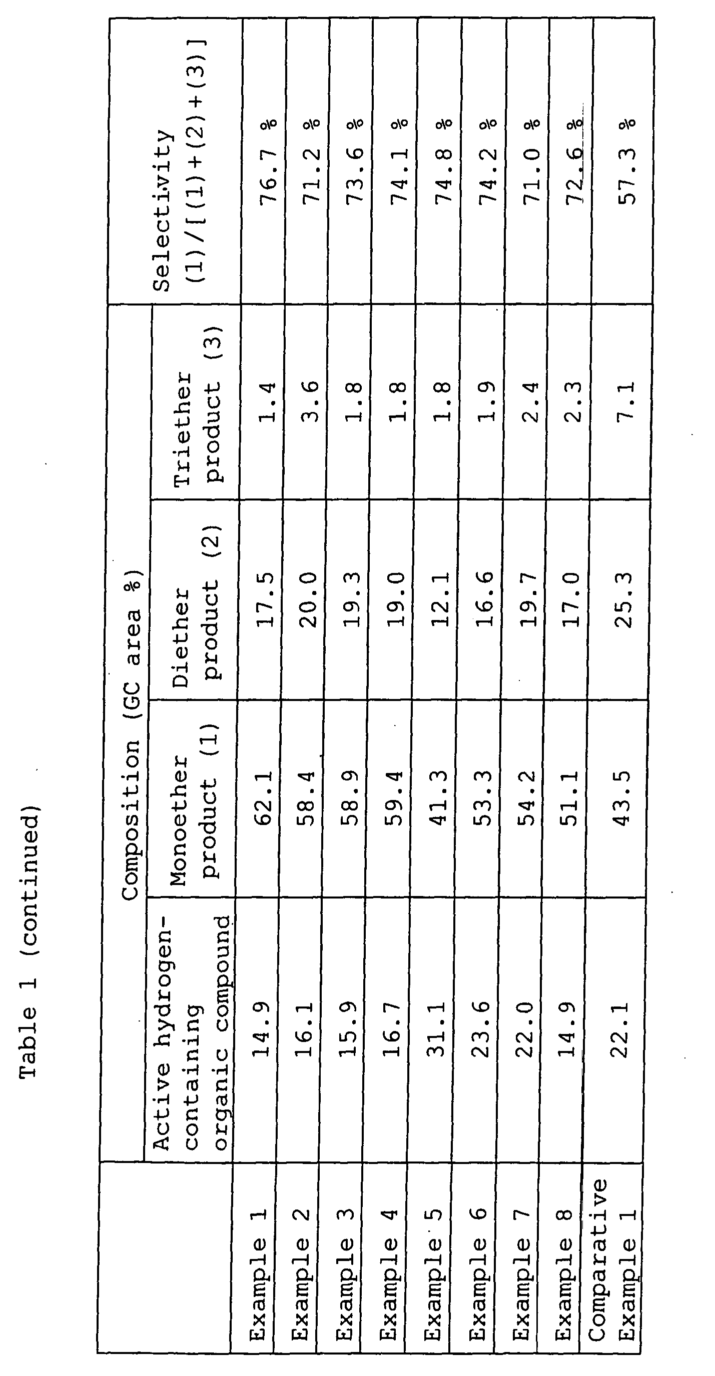

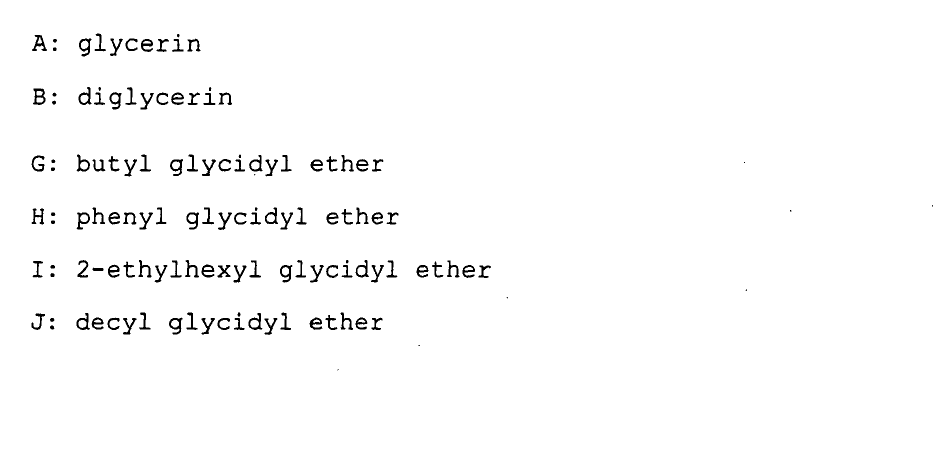

### Examples 9 to 11

Using Catalyst 2, a glycidyl ether and an active hydrogen-containing organic compound each in an amount shown in Table 2 were reacted similarly to Example 1 at the temperature and for the time shown in Table 2. The composition and the selectivity of each of the products obtained by analyzing them by means of gas chromatography are shown in Table 2.

### Comparative Example 2

NaOH (6.42g) was used as a catalyst, and a glycidyl ether and an active hydrogen-containing organic compound each in an amount shown in Table 2 were reacted in the same manner as in Example 1 at the temperature and for the time shown in Table 2. The composition and the selectivity of the product obtained by analyzing it by means of gas chromatography are shown in Table 2.

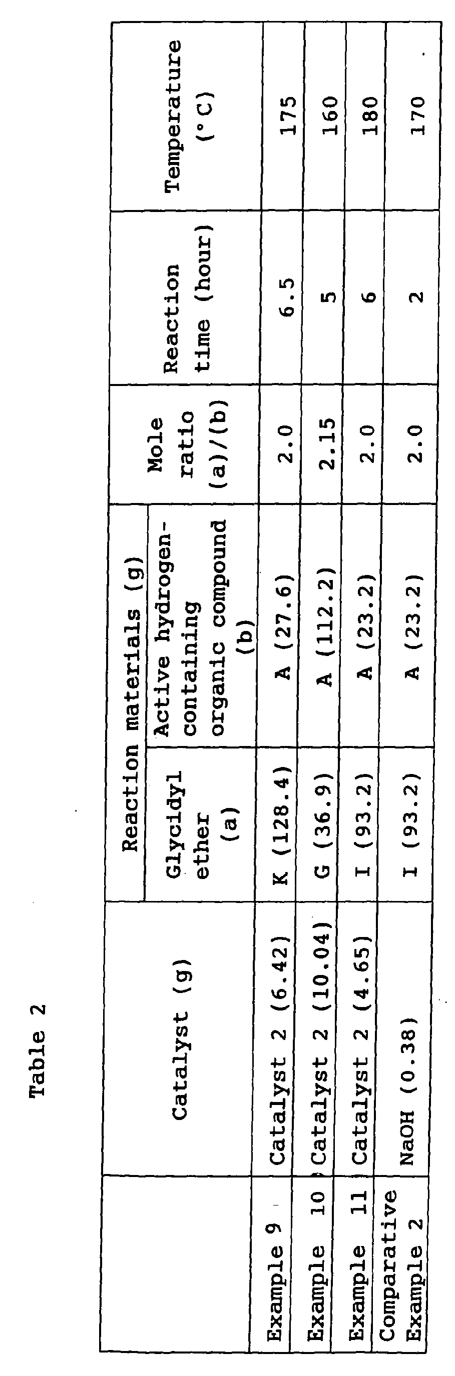

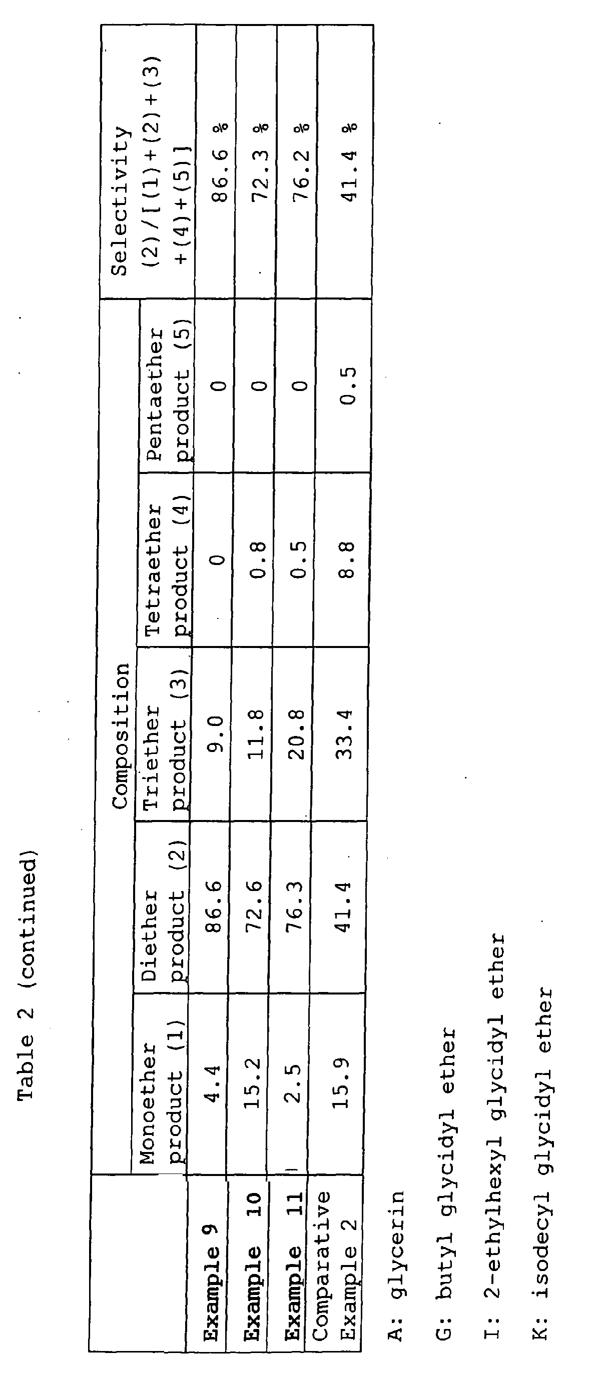

In an addition reaction between an active hydrogen-containing organic compound and a glycidyl ether, use of the preferred catalyst of the present invention enables inhibition of an excess addition reaction of glycidyl ether which is a successive reaction, and a mono- or di-(alkyl, alkenyl or phenyl) ether product in which one or two glycidyl ethers are added is selectively obtained by adjusting the mole ratio of the active hydrogen-containing organic compound to the glycidyl ether to fall in a specific range. That is, a mono- or di-(alkyl, alkenyl or phenyl) ether product can be obtained at a high productivity with a high purity.

## Claims

1. A process for producing a glycidyl ether adduct, which comprises subjecting an active hydrogen-containing organic compound and a glycidyl ether to an addition reaction in the presence of a catalyst comprising a complex oxide of magnesium and at least one element selected from aluminium and zinc, wherein the active hydrogen-containing organic compound is at least one selected from the group consisting of ethylene glycol, 1,2-propanediol, 1,3-propanediol, glycerin, pentaerythritol, diglycerin, polyglycerin, sorbitol, glucose, sucrose, and mixtures thereof.

2. The process according to claim 1, wherein the glycidyl ether is represented by Formula (1): 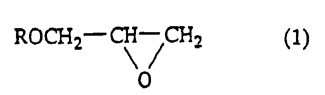 wherein R represents a linear or branched alkyl or alkenyl group having 1 to 36 carbon atoms or a phenyl group.

3. The process according to claim 1 or 2, wherein the glycidyl ether adduct is a product in which one clycidyl ether is added.

4. The process according to claim 1 for producing a product in which one glycidyl ether is added, wherein the mole ratio of the glycidyl ether to the organic compound is in a range of from 1 : 0.9 to 1 : 3.

5. The process according to claim 1 for producing a product in which two glycidyl ethers are added, wherein the mole ratio of the glycidyl ether to the organic compound is in a range of from 1.8 : 1 to 3 : 1.

## Patentansprüche

1. Verfahren zur Erzeugung eines Glycidyletheraddukts, umfassend die Durchführung einer Additionsreaktion einer aktiven wasserstoffhaltigen, organischen Verbindung und eines Glycidylethers in der Gegenwart eines Katalysators, umfassend ein komplexes Oxid aus Magnesium und zumindest einem Element, ausgewählt aus Aluminium und Zink, worin die aktive wasserstoffhaltige organische Verbindung zumindest eine ist, ausgewählt aus der Gruppe bestehend aus Ethylenglycol, 1,2-Propandiol, 1,3-Propandiol, Glycerin, Pentaerythritol, Diglycerin, Polyglycerin, Sorbit, Glucose, Sucrose und Mischungen davon.

2. Verfahren nach Anspruch 1, worin der Glycidylether durch die Formel (1) dargestellt ist: 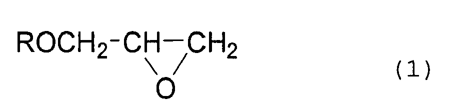 worin R eine lineare oder verzweigte Alkyl- oder Alkenylgruppe mit 1 bis 36 Kohlenstoffatomen oder eine Phenylgruppe ist.

3. Verfahren nach Anspruch 1 oder 2, worin das Glycidyletheraddukt ein Produkt ist, worin ein Glycidylether addiert ist.

4. Verfahren nach Anspruch 1 zur Erzeugung eines Produkts, worin ein Glycidylether addiert ist, worin das Molverhältnis des Glycidylethers zur organischen Verbindung im Bereich von 1:0,9 bis 1:3 ist.

5. Verfahren nach Anspruch 1 zur Erzeugung eines Produkts, worin zwei Glycidylether addiert sind, worin das Molverhältnis des Glycidylethers zur organischen Verbindung im Bereich von 1,8:1 bis 3:1 ist.

## Revendications

1. Procédé pour produire un adduit de glycidyléther, qui comprend la soumission d'un composé organique contenant de l'hydrogène actif et d'un glycidyléther à une réaction d'addition en présence d'un catalyseur comprenant un oxyde de magnésium complexe et au moins un élément sélectionné parmi l'aluminium et le zinc, dans lequel le composé organique contenant de l'hydrogène actif est au moins un sélectionné dans le groupe constitué par l'éthylène glycol, le 1,2-propanediol, le 1,3-propanediol, la glycérine, le pentaérythritol, la diglycérine, la polyglycérine, le sorbitol, le glucose, le saccharose, et des mélanges de ceux-ci.

2. Procédé selon la revendication 1, dans lequel le glycidyléther est représenté par la Formule (1) : 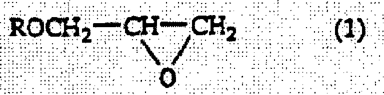 dans laquelle R représente un groupe alkyle ou alcényle linéaire ou ramifié ayant 1 à 36 atomes de carbone ou un groupe phényle.

3. Procédé selon la revendication 1 ou 2, dans lequel l'adduit de glycidyléther est un produit dans lequel un glycidyléther est ajouté.

4. Procédé selon la revendication 1 pour produire un produit dans lequel un glycidyléther est ajouté, dans lequel le rapport molaire du glycidyléther au composé organique se situe dans une plage comprise entre 1 : 0,9 et 1 : 3.

5. Procédé selon la revendication 1 pour produire un produit dans lequel deux glycidyléthers sont ajoutés, dans lequel le rapport molaire du glycidyléther au composé organique se situe dans une plage comprise entre 1,8 : 1 et 3 : 1.
